# EUROPEAN PATENT SPECIFICATION

(11) **EP 4 429 886 B1**
(45) Date of publication and mention of the grant of the patent: **05.08.2026**
(21) Application number: 22801232.4
(22) Date of filing: 26.10.2022
(51) Int. Cl.: C07F 9/38, C07F 9/40, C08F 214/00, C08F 130/02, C08F 230/02, H01M 8/1018, H01M 10/052, H01M 10/0565

(54) **MULTIFUNCTIONAL FLUORINATED PHOSPHOROUS COMPOUNDS, METHODS OF MAKING, AND ARTICLES AND USES THEREOF**
FLUORIERTE MULTIFUNKTIONELLE PHOSPHORVERBINDUNGEN, VERFAHREN ZUR HERSTELLUNG UND ARTIKEL UND VERWENDUNGEN DAVON
COMPOSÉS PHOSPHORÉS FLUORÉS MULTIFONCTIONNELS, PROCÉDÉS DE FABRICATION, ET ARTICLES ET UTILISATIONS ASSOCIÉS

(30) Priority: 08.11.2021 US 202163276681 P
(43) Date of publication of application: 18.09.2024
(73) Proprietor: 3M Innovative Properties Company, Saint Paul, Minnesota 55133-3427 (US)
(72) Inventor: HIRSCHBERG, Markus E., 41453 Neuss (DE); MUGGLI, Mark W., 41453 Neuss (DE); PAJKERT, Romana M., 28759 Bremen (DE); RÖSCHENTHALER, Gerd-Voker, 28759 Bremen (DE); TVERDOMED, Sergey N., 28759 Bremen (DE)
(74) Representative: Mathys & Squire
(86) International application number: PCT/IB2022/060291
(87) International publication number: WO 2023/079414

(56) References cited:
- SU-A1- 392 071
- XP093367277
- WEHBI MOHAMMAD ET AL: "Phosphorus-Containing Fluoropolymers: State of the Art and Applications", APPLIED MATERIALS & INTERFACES, vol. 12, no. 1, 8 January 2020 (2020-01-08), US, pages 38 - 59, XP093016363, ISSN: 1944-8244, DOI: 10.1021/acsami.9b16228
- NAIR HARIDASAN K. ET AL: "Facile Synthesis of Fluorinated Phosphonates via Photochemical and Thermal Reactions", JOURNAL OF THE AMERICAN CHEMICAL SOCIETY, vol. 119, no. 39, 1 October 1997 (1997-10-01), pages 9137 - 9143, XP093016359, ISSN: 0002-7863, DOI: 10.1021/ja971345t
- DATABASE REAXYS [online] 1 January 1959 (1959-01-01), KNUNJANZ ET AL.: "Rx-ID: 835811", XP093016799, Database accession no. Rx-ID: 835811
- DATABASE REAXYS [online] 1 January 1974 (1974-01-01), D'JAKOW ET AL: "SU392071 A1", XP093016800, Database accession no. XRN = 2482116, 2488914

## Description

### TECHNICAL FIELD

Methods of making phosphorous compounds comprising an additional functional group are disclosed. Such compounds can be polymerized to generate proton exchange membranes and/or used in metal bonding.

### BACKGROUND

Wehbi et al, in Applied Materials & Interfaces, v. 12, pages 38-59 (2020) describe strategies for synthesizing fluorinated (co)polymers containing phosphorous groups.

### SUMMARY

Because phosphorous and fluorine atoms bring complimentary properties, the combining of these atoms into a molecule can result in synergetic features making them valuable for materials such as ionomeric polymers for use in polymer electrolyte membranes, adhesion promoters, and anticorrosive coatings to name a few.

Ionomeric fluoropolymers comprising both fluorine and phosphorous atoms are typically obtained by direct homopolymerization of monomers bearing both elements, radical copolymerization of fluoroolefins with vinyl monomers containing dialkyl phosphonates, or chemical modification of various types of phosphorous or fluorinated polymers. With respect to monomers bearing a fluorinated olefinic group (especially with more than 2 carbon atoms) and a phosphorous moiety, the methods to produce such monomers are in general very cumbersome involving many steps and/or more elaborate process conditions (such as ultraviolet light or extreme temperatures). For example, EP 0398250 B1 (Tatemoto) describes three different ways to prepare vinylphosphonic acid derivatives. The first preparation reacts tetrafluoroethylene with a trialkyl phosphite at 170°C for 8 hours. The second preparation involves at least five reaction steps including a pyrolysis at 180-220°C. The third preparation involves at least five reaction steps including heating at 150°C and the use of peroxides. J. Am. Chem. Soc. 1997, 119, 9137-9143 teaches a method for making (EtO)₂P(O)CF₂CF=CF₂ wherein a diphosphonic acid is contacted with ultraviolet radiation in the presence of an alkenyl iodide followed by a peroxidic oxidation with an isolated yield of 59%.

There is a desire to identify alternative methods of making fluorinated phosphorous-containing compounds, especially phosphorous-containing monomers having a carbon-carbon double bond. The new methods should involve fewer process steps and provide (a) high yields, (b) use reagents that are more readily available and are more environmentally-friendly, (c) minimize the formation of unwanted by-products or phosphoryl chloride, which make isolation difficult, and/or (d) use processes that are more user friendly for large scale processing (such as not relying on radical generation by ultraviolet light or utilizing temperatures below -90°C or greater than 100°C).

In a first aspect, a method for making a multifunctional compound is provided as set out in claim 1, the method comprising:
(a) providing a first compound represented by H-(OR)ₙ-P(=O)(ORₕ¹)₂ wherein R is selected from the group consisting of -CH₂-, -(CH₂)₂-, -(CH₂)₃-, -(CH₂)₄-, and -CH(CH₃)-;
(b) combining the first compound with a base to form an intermediate; and
(c) reacting the intermediate with a second compound to form a third compound, wherein the second compound is represented by

   CFY¹=CF-CF₂Y² (IIA) or CFY²=CF-CF₂Y¹ (IIB)

   and the third compound is represented by

   CF₂=CF-CFY²-(OR)ₙ-P(=O)(ORₕ¹)₂ (IIIA)

   or

   CF₂X¹CF=CF-(OR)ₙ-P(=O)(ORₕ¹)₂ (IIIB)

   where:
   R is selected from the group consisting of -CH₂-, -(CH₂)₂-, -(CH₂)₃-, -(CH₂)₄-, and -CH(CH₃)-;
   X¹ is F or -(OR)ₙ-P(=O)(ORₕ¹)₂;
   n is 0 or 1;
   Rₕ¹ is an alkyl group having 1 to 6 carbon atoms and optionally comprising at least one catenated ether linkage;
   Y¹ is -F, -I, -Cl, -Br, -OSO₂Cl, -OSO₂CH₃, -OSO₂F, or -OSO₂CF₃; and
   Y² is -F, -Cl, -Br, -H, or a fluoroalkyl group comprising 1 to 3 carbon atoms, wherein the fluoroalkyl group optionally comprises at least one of an ether linkage, Cl, Br, or I.

In one embodiment, the third compound from above is silylated to form a fourth compound of the formula

CF₂=CF-CFY²-(OR)ₙ-P(=O)(OSiRₕ²₃)₂ (IVA)

or

CF₂X²CF=CF-(OR)ₙ-P(=O)(OSiRₕ²₃)₂ (IVB)

where
R is selected from the group consisting of -CH₂-, -(CH₂)₂-, -(CH₂)₃-, -(CH₂)₄-, and -CH(CH₃)-;
X² is F or -(OR)ₙ-P(=O)(OSiRₕ²₃)₂;
n is 0 or 1;
Rₕ² is an alkyl group comprising 1 to 2 carbons; and
Y² is -F, -Cl, -Br, -H, or a fluoroalkyl group comprising 1 to 3 carbon atoms, wherein the fluoroalkyl group optionally comprises at least one of an ether linkage, Cl, Br, or I.

In another embodiment, the fourth compound from above is transesterified by an alcohol to form a phosphonic acid compound according to the formula

CF₂=CF-CFY²-(OR)ₙ-P(=O)(OH)₂ (VA)

or

CF₂X³CF=CF-(OR)ₙ-P(=O)(OH)₂ (VB),

where
R is selected from the group consisting of -CH₂-, -(CH₂)₂-, -(CH₂)₃-, -(CH₂)₄-, and -CH(CH₃)-;
X³ is F or -(OR)ₙ-P(=O)(OH)₂;
n is 0 or 1; and
Y² is -F, -Cl, -Br, -H, or a fluoroalkyl group comprising 1 to 3 carbon atoms, wherein the fluoroalkyl group optionally comprises at least one of an ether linkage, Cl, Br, or I.

In a second aspect, novel compounds are provided as set out in claim 7, said compounds being according to one of the following formulas:

CF₂=CF-CFY²-(OR)-P(=O)(OQ)₂ (VIIA)

CF₂X³CF=CF-(OR)-P(=O)(OQ)₂ (VIIB),

or

CF₂X³CHFC(=O)-(OR)-P(=O)(OH)₂ (VIB)

where:
R is selected from the group consisting of -CH₂-, -(CH₂)₂-, -(CH₂)₃-, -(CH₂)₄-, and -CH(CH₃)-;
X³ is F or -(OR)-P(=O)(OQ)₂;
Y² is -F, -Cl, -Br, -H, or a fluoroalkyl group comprising 1 to 3 carbon atoms, wherein the fluoroalkyl group optionally comprises at least one of an ether linkage, Cl, Br, or I; and
Q is an alkyl group having 1 to 6 carbon atoms and optionally comprising at least one catenated ether linkage, -Si(CH₃)₃, -Si(CH₂CH₃)₃, -H, a metallic cation, or a quaternary ammonium cation.

In other aspects, compositions comprising a purified form of a compound according to the second aspect and electrochemical articles comprising a compound according to the second aspect are provided as set out in claims 9 and 10, respectively.

In further aspects, polymers derived from a compound according to the second aspect are provided as set out in claims 11-12 and electrochemical articles comprising such a polymer are provided as set out in claim 13. In one embodiment of such electrochemical articles, the electrochemical article comprises a proton exchange membrane prepared from the polymer.

In yet another aspect, a chelating and adhesion agent is provided as set out in claim 15, the agent being according to the following formula:

CF₂X³CHFC(=O)-(OR)ₙ-P(=O)(OH)₂ (VIB')

where:
R is selected from the group consisting of -CH₂-, -(CH₂)₂-, -(CH₂)₃-, -(CH₂)₄-, and -CH(CH₃)-;
X³ is F or -(OR)ₙ-P(=O)(OQ)₂;
n is 0 or 1; and
Q is an alkyl group having 1 to 6 carbon atoms and optionally comprising at least one catenated ether linkage, -Si(CH₃)₃, -Si(CH₂CH₃)₃, -H, a metallic cation, or a quaternary ammonium cation.

The above summary is not intended to describe each embodiment. The details of one or more embodiments of the invention as defined in the claims are also set forth in the description below. Other features, objects, and advantages will be apparent from the description and from the claims.

### DETAILED DESCRIPTION

As used herein, the term
"a", "an", and "the" are used interchangeably and mean one or more; and
"and/or" is used to indicate one or both stated cases may occur, for example A and/or B includes, (A and B) and (A or B).

Also herein, recitation of ranges by endpoints includes all numbers subsumed within that range (e.g., 1 to 10 includes 1.4, 1.9, 2.33, 5.75, 9.98, etc.).

Also herein, recitation of "at least one" includes all numbers of one and greater (e.g., at least 2, at least 4, at least 6, at least 8, at least 10, at least 25, at least 50, at least 100, etc.).

The present disclosure is directed toward a novel synthesis of phosphate-containing fluorinated compounds comprising an additional functional group. Such a reaction enables the synthesis of a phosphorous salt intermediate which can then be further reacted to form multifunctional compounds, comprising a fluorinated moiety (in some embodiments, a fluorinated alkene moiety) and a phosphorous moiety.

In addition, due to the new synthetic route, additional novel molecules were realized as disclosed herein.

In the method of the present disclosure, a first compound represented by formula (I) is combined with a base to form an intermediate, which is then subsequently reacted with a second compound to form Formula (IIA) or (IIB).

The first compound is represented by the formula: H-(OR)ₙ-P(=O)(ORₕ¹)₂ (I), wherein n is an integer of 0 or 1; R is selected from the group consisting of -CH₂-, -(CH₂)₂-, -(CH₂)₃-, - (CH₂)₄-, -CH(CH₃)-; and Rₕ¹ is a hydrocarbon alkyl group having 1 to 6 carbon atoms and optionally comprising at least one catenated ether linkage. The alkyl group may be linear, branched, or cyclic in nature, optionally comprising at least one catenated ether linkage. Exemplary Rₕ¹ groups include: -CH₂CH₃, -CH₂CH₂CH₃, -CH₂CH₂CH₂CH₃, -C(CH₃)₃, - CH(CH₃)₂, -*c*-C₆H₁₁, and -(CH₂)₂-O-CH₃. As shown in formula (I) above, the molecule comprises two ORₕ¹ groups, which are typically identical. Molecules according to Formula (I) may be commercially available or synthesized using known processes such as reaction of diethyl hydrogen phosphite with paraformaldehyde and potassium carbonate in alcohol. Exemplary molecules according to Formula (I) are dimethyl hydrogen phosphite, diethyl hydrogen phosphite, dimethyl (hydroxymethyl)phosphonate and diethyl (hydroxymethyl)phosphonate.

A base is used to deprotonate the first compound to form an intermediate salt. Such bases include non-nucleophilic bases known in the art including: alkali and alkaline earth metal hydrides such as sodium hydride, lithium hydride, potassium hydride, calcium hydride, ruthenium hydride and caesium hydride; metal bicarbonates such as sodium bicarbonate and potassium bicarbonate; metal tert-butoxide such as sodium tert-butoxide and potassium *tert-*butoxide; n-butyl lithium; and strong non-nucleophilic bases such as lithium diisopropylamide, sec-butyllithium, lithium bis(trimethylsilyl)amide, and 1,8-diazabicylco[5.4.0]undec-7-ene. In one embodiment, the strong non-nucleophilic base has a pKa value of its conjugate acid in water of greater than 10.

The first compound is reacted with a base to form an intermediate salt. Typically, this reaction is conducted in a polar aprotic solvent. Exemplary solvents that are preferably used are non-reactive organic solvents, including nitriles (such as acetonitrile and propionitrile); ethers (such as tetrahydrofuran, diethylether, and 1,4-dioxane); amides (such as dimethylformamide, dimethylacetamide, and hexamethylphosphoramide); glymes (such as monoglyme, diglyme, tetraglyme, and di(propylene glycol) methylether); lactames (such as N-methylpyrrolidinone); and combinations thereof. In one embodiment, the reaction of the first compound of formula (I) with the base may occur at pressures from at least ambient (1 bar), 3 bar, or even 5 bar to pressures no higher than 10 bar, 15 bar, or even 20 bar. In one embodiment, the reaction of the first compound of formula (I) with the base may occur at temperatures of at least -30, -20, -10, - 5, 0, 10, 20, or even 25 °C; and at most 80, 60, 40, or even 35 °C. In one embodiment, the molar ratio of the first compound of formula (I) with the base is 20:1 to 1:20, preferably 10:1 to 1:10.

The intermediate salt is then reacted with a second compound represented by the formulas CFY¹=CF-CF₂Y² (IIA) or CFY²=CF-CF₂Y¹ (IIB) where Y¹ is a leaving group selected from -F, -I, -Cl, -Br, -OSO₂Cl, -OSO₂CH₃, -OSO₂F, or -OSO₂CF₃ and Y² is -H, -F, -Cl, -Br, or a fluoroalkyl group comprising 1 to 3 carbon atoms. The fluoroalkyl group may comprise a fully fluorinated or partially fluorinated moiety. The fluoroalkyl group may optionally comprise an ether linkage and/or at least one of a chlorine, bromine, or iodine substituent. Exemplary second compounds include hexafluoropropylene, 1,1,2,3,3-pentafluoropropene, 3-iodoperfluoropropene, 3-chloroperfluoropropene, 3-bromoperfluoropropene, CF₃O-CF=CF-CF₃, CF₃-O-CF₂-CF=CF₂, CF₃-CF₂-O-CF=CF-CF₃, CF₃-CF₂-O-CF₂-CF=CF₂, CF₃-CF₃-CFz-O-CF=CF-CF₃, CF₃-CF₃-CF₂-O-CF₂-CF=CF₂, CF₂=CFCF₂O₂SO₂CF₃, CF₂=CFCF₂OSO₂CH₃, CF₂=CFCF₂OSO₂Cl, CF₂=CFCF₂OSO₂F, 1,1,1,2,3-pentafluoropropene, 1-chloroperfluoropropene, 1-bromoperfluoropropene, CF₃CF=CFOSO₂CH₃, and CF₃CF=CFOSO₂Cl.

Although not wanting to be bound by theory, it is believed that the second compound reacts by nucleophilic addition with the (OR)ₙ-P(=O)(ORₕ¹)₂⁻ anion adding to the Y² side of the double bond in an SN2 type reaction under rearrangement of the double bond and release of the leaving group as shown by the exemplary equation below where Y¹ in formula (IIA) is replaced by -OSO₂CF₃:
[(OR)ₙ-P(=O)(ORₕ¹)₂]⁻ + CFY²=CF-CF₂-OSO₂CF₃ → CF₂=CFCFY²-(OR)ₙ-P(=O)(ORₕ¹)₂. It is noted that hexafluoropropylene appears to undergo a slightly different reaction mechanism than that just mentioned, such as including additional rearrangement, wherein [(OR)ₙ-P(=O)(ORₕ¹)₂]⁻ + CF₂=CF-CF₃ → CF₃CF=CF-(OR)ₙ-P(=O)(ORₕ¹).

The reaction of the second compound with the intermediate is done in solvent under temperatures to form the corresponding third compound represented by formulas CF₂=CF-CFY²-(OR)ₙ-P(=O)(ORₕ¹)₂ (IIIA) and CF₂X¹CF=CF-(OR)ₙ-P(=O)(ORₕ¹)₂ (IIIB) where X¹ is F or - (OR)ₙ-P(=O)(ORₕ¹)₂; and R, n, Rₕ¹, Y¹, and Y² are the same as disclosed above. Typically, the reaction of the first compound with a base and then the subsequent reaction with the second compound may be done in a single pot. However, typically the addition of the second compound is added later so that the intermediate salt forms to prevent competing side reactions. In one embodiment, the mole ratio of the second compound to the intermediate salt is 1:5 to 5:1, preferably 2:1 to 1:2. Typically, this reaction is conducted in a similar polar aprotic solvent as mentioned above, even the same solvent as used in the above-mentioned reaction. In one embodiment, the reaction of the second compound with the intermediate salt may occur at pressures from at least ambient (1 bar), 3 bar, or even 5 bar to pressures no higher than 10 bar, 15 bar, or even 20 bar. In one embodiment, the reaction may occur at temperatures of at least - 30, -20, -10, -5, 0, 10, 20, or even 25 °C; and at most 80, 60, 50, 40, or even 35 °C.

The third compound may undergo further processing to obtain a protonated phosphorous moiety. For example, the third compound may be silylated to form a fourth compound of the formulas CF₂=CF-CFY²-(OR)ₙ-P(=O)(OSiRₕ²₃)₂ (IVA) or CF₂X²CF=CF-(OR)ₙ-P(=O)(OSiRₕ²₃)₂ (IVB), where X² is F or -(OR)ₙ-P(=O)(OSiRₕ²₃)₂; Rₕ² is an alkyl group comprising 1 to 2 carbons; and R, n, and Y² are the same as described above. Such silylating reactions can include the use of a bromo or chloro trialkylsilane to replace the Rₕ¹ group in Formulas (IIIA) and (IIIB) with a trialkyl silyl group (e.g., -SiRₕ²₃).

Typically, this silylation reaction is not conducted in a solvent. In one embodiment, the mole ratio of the third compound to the silylating agent is 1:5 to 5:1, preferably 3:1 to 1:3. In one embodiment, the silylation reaction may occur at pressures from at least ambient (1 bar), 3 bar, or even 5 bar to pressures no higher than 10 bar, 15 bar, or even 20 bar. In one embodiment, the silylation reaction may occur at temperatures of at least -30 °C, 0 °C, 20 °C, or even 25 °C; and at most 80 °C, 50 °C, or even 35 °C.

The fourth compound may then be reacted to yield a fifth compound of the formulas CF₂=CF-CFY²-(OR)ₙ-P(=O)(OH)₂ (VA) or CF₂X³CF=CF-(OR)ₙ-P(=O)(OH)₂ (VB), which is a phosphonic acid. In Formulas (VA) and (VB), X³ is F or -(OR)ₙ-P(=O)(OH)₂ and R, n, and Y² are the same as described above. Such transesterifaction reactions may be performed by contacting the fourth compound with an alcohol, such as methanol, ethanol, propanol, etc. If desired, the phosphonic acid compound of Formulas (VA) and (VB) may be converted to a salt (such as potassium, sodium, calcium, quaternary ammonium, etc.) using standard acid base chemistry known in the art.

The reaction of the fourth compound of Formula (IVA) to yield the fifth compound (VA) is as follows:

CF₂=CF-CFY²-(OR)ₙ-P(=O)(OSiRₕ²₃)₂ + alcohol (dry) → CF₂=CF-CFY²-(OR)ₙ-P(=O)(OH)₂

This reaction will be referred to herein under the general term "transesterification" to describe the transformation of one ester into another ester through the interchange of the alkoxy moiety.

Typically, this transesterification reaction is conducted at temperatures of at least -30 °C, 0 °C, 10 °C, or even 15 °C; and at most 30 °C, 20°C, or even 25 °C. In one embodiment, the transesterification reaction is conducted at pressures from at least ambient (1 bar), 3 bar, or even 5 bar to pressures no higher than 10 bar, 15 bar, or even 20 bar. Typically, to achieve high yield, an excess of the alcohol is used for example the molar ratio of the fourth compound to the alcohol is 1:1 to 1:200, preferably 1:1 to 1:100. In one embodiment, a catalyst (such as a strong acid or base) may be used to favor product formation.

The process as described above can make ionomer precursors or monomers such as (HO)₂P(=O)-CF₂CF=CF₂; (HO)₂P(=O)-CH₂OCF₂CF=CF₂; (HO)₂P(=O)-CH₂OCF=CFCF₃; and salts thereof.

In one embodiment, if the alcohol used in the transesterification reaction described above is not dry (i.e., free of water), the fourth compound can undergo a hydrolysis wherein Formula (IVB) is converted to a compound according to Formula (VIB'): CF₂X³CFHC(=O)(OR)ₙ-P(=O)(OH)₂ where R, n, and X³ are as described above.

It is to be appreciated that the multifunctional compounds of the present disclosure may include the cis isomer, the trans isomer, or a mixture of cis and trans isomers.

It should also be appreciated that the phosphonic acid groups in the reaction products may be exchanged using standard chemistry practices to convert the acid into a corresponding salt. In one embodiment, the counter ion is organic, such as an alkylammonium (e.g., tetramethylammonium, tetrabutylammonium, etc.). In another embodiment, the counter ion is inorganic, such as an ammonium, or a metal, such as alkali metal (e.g., Na, K, Li, etc.) or alkaline earth metal (e.g., Mg, Ca, etc.).

The molecules as made by the processes disclosed herein may be subsequently purified for use to isolate the desired compound. Purification can be done by conventional means including distillation, absorption, extraction, chromatography and recrystallization. The purification can be done to isolate the desired compound of the present disclosure (in all its distereoisomeric forms) from impurities, such as starting materials, byproducts, etc. The term "purified form" as used herein means the desired compound is at least 90, 95, 98, or even 99 wt% pure.

As discussed above and exemplified below, the generation of phosphorous-containing monomers having a carbon-carbon double bond can be achieved in as few as two to three process steps, none of which require ultraviolet radiation or temperatures above 100°C. As shown in the examples below isolated yields of at least 65, 70, 75, or even 80% can readily be achieved, without the use of chlorofluorocarbon based solvents nor the generation of phophoryl chlorides.

As disclosed above, a number of molecules may be synthesized using the processes disclosed herein.

As indicated supra, in one aspect, the present disclosure is directed toward a chelating and adhesion agent according to the formula: CF₂X³CHFC(=O)-(OR)ₙ-P(=O)(OH)₂ (VIB') where: R is selected from the group consisting of -CH₂-, -(CH₂)₂-, -(CH₂)₃-, -(CH₂)₄-, and -CH(CH₃)-; X³ is F or -(OR)ₙ-P(=O)(OQ)₂; n is 0 or 1; and Q is an alkyl group having 1 to 6 carbon atoms and optionally comprising at least one catenated ether linkage, -Si(CH₃)₃, -Si(CH₂CH₃)₃, -H, a metallic cation, or a quaternary ammonium cation,

Also as indicated supra, in other aspects, the present disclosure is directed toward novel compounds such as those shown by Formula (VIB) CF₂X³CFHC(=O)(OR)-P(=O)(OH)₂, Formula (VIIA) CF₂=CF-CFY²-OR-P(=O)(OQ)₂, or Formula (VIIB) CF₂X³CF=CF-OR-P(=O)(OQ)₂ where R is selected from the group consisting of -CH₂-, -(CH₂)₂-, -(CH₂)₃-, -(CH₂)₄-, and -CH(CH₃)-; X³ is F or -(OR) -P(=O)(OQ)₂;Y² is -F, -Cl, -Br, -H, or a fluoroalkyl group; and Q is an alkyl group having 1 to 6 carbon atoms and optionally comprising at least one catenated ether linkage, - Si(CH₃)₃, -Si(CH₂CH₃)₃, -H, a metallic cation, or a quaternary ammonium cation.

Exemplary molecules include: (QO)₂P(=O)-(RO)-CF₂CF=CF₂ wherein R is selected from the group consisting of -CH₂-, -(CH₂)₂-, -(CH₂)₃-, -(CH₂)₄-, and -CH(CH₃)-, and Q is an alkyl group having 1 to 6 carbon atoms and optionally comprising at least one catenated ether linkage, - Si(CH₃)₃, -Si(CH₂CH₃)₃, -H, a metallic cation, or a quaternary ammonium cation. Such a molecule includes: dialkyl{[(1,1,2,3,3-pentafluoroprop-2-en-1-yl)oxy]methl}phosphonate.

Exemplary molecules include: (QO)₂P(=O)-(RO)-CF=CFCF₃ wherein R is selected from the group consisting of -CH₂-, -(CH₂)₂-, -(CH₂)₃-, -(CH₂)₄-, and -CH(CH₃)-, and Q is an alkyl group having 1 to 6 carbon atoms and optionally comprising at least one catenated ether linkage, - Si(CH₃)₃, -Si(CH₂CH₃)₃, -H, a metallic cation, or a quaternary ammonium cation. Such molecules include: ({[(1E and 1Z)-perfluoropropenyl-oxy}methyl)phosphonic acid.

In one embodiment, the multifunctional molecules disclosed herein can be useful in electrochemical cells (e.g., fuel cell, redox flow battery, etc.). Electrochemical devices, including proton exchange membrane fuel cells (PEMFCs), sensors, electrolyzers, chlor-alkali separation membranes, redox flow batteries, and the like, typically comprise an ion conducting membrane or polymer electrolyte membrane sandwiched between two electrodes, a cathode and an anode. The membrane and the two electrodes are sandwiched between current collector plates, which optionally have a field flow pattern etched thereon, and then held together such that each layer is in contact, preferably intimate contact with the adjacent layers to form an electrochemical cell. Charge movement between the anode and cathode enables the electrochemical device.

In one embodiment, the monomers as disclosed herein may be useful in generating ionomeric polymers, which may be used in electrochemical cells. In one embodiment, the phosphorous-containing compounds disclosed herein comprising a double bond are interpolymerized to form a homopolymer. In another embodiment, the ionic fluorinated polymer is derived from the interpolymerization of the phosphorous-containing compounds disclosed herein comprising a double bond with fluorinated monomers including tetrafluoroethylene, hexafluoropropylene, vinyl fluoride, vinylidene fluoride, fluorinated ether monomers (for example, perfluoro (methyl vinyl) ether, perfluoro (ethyl vinyl) ether, perfluoro (n-propyl vinyl) ether, perfluoro-2-propoxypropylvinyl ether, perfluoro-3-methoxy-n-propylvinyl ether, etc.) and other fluorinated monomers as known in the art. Polymerization techniques of these particular monomers would be similar to those techniques known in the art.

The ionic fluorinated polymer may be cast or processed into an ion exchange membrane. For example, the ionic fluorinated polymer may be formed into a liquid composition, which is subsequently cast or imbibed into a support (such as porous polytetrafluoroethylene) to generate a membrane. In one embodiment, the resulting polymer electrolyte membrane has a thickness of at most 200, 90, 60, or even 40 micrometers, and at least 10, 15, 20, 35, 30, or even 35 micrometers

The ionomeric polymer and/or the resulting polymeric electrolyte membrane should be sufficiently conductive for use in electrochemical cells. In one embodiment, when measured in the acid form (e.g., the ionic fluorinated polymer in its acid form, or the polymer electrolyte membrane in its acid form), the ionic fluorinated polymer and/or the resulting polymeric electrolyte membrane has a conductivity of at least 1, 10, 20, or even 30 mS/cm and at most 50, 60, 70, 80, 90, 100 or even 200 mS/cm (milliSiemens per centimeter) at 50% relative humidity (RH) and 80°C.

In one embodiment, the ionic fluorinated polymer made from the multifunctional monomers disclosed herein has an equivalent weight (EW) of at least 200, 700, or even 800, and at most 1500, 1200, 1100, 1000, or even 900 grams/mole.

Because of the good bonding of the phosphorous-containing moiety to other metals, the compounds disclosed herein (or polymers therefrom) can be used to improve the adhesion of fluorinated compositions to metal substrates.

In one embodiment, the multifunctional compounds as disclosed herein (or polymers therefrom) may be used to facilitate adhesion within the electrochemical cell. For example, in one embodiment, the multifunctional compounds disclosed herein can be contacted with catalyst particles comprising metals such as platinum, ruthenium or iridium, which are used in an anode and/or cathode. The multifunctional compounds would allow good bonding of fluorinated moieties to these metal catalyst particles in wet and dry conditions, thus increasing the durability of the electrodes.

In another embodiment, the multifunctional compounds as disclosed herein (or polymers therefrom) could improve bonding of the polymer electrolyte membrane to metallic current collector plates, such that the overall sealing in the electrochemical cell is improved, since no gases will be able to escape out of the electrochemical cell in a lateral direction.

Advantageously, because of the chelating ability of phosphonic acid or salt thereof, the presence of the multifunctional compounds as disclosed herein (or polymers therefrom) in electrochemical cells may be used as radical scavengers, helping to bind cerium, manganese, or other species. Because the phosphonic acid moiety (or salt thereof) in the present disclosure is on a molecule that can be polymerized, these radical scavengers can be immobilized, preventing the radical scavengers and/or the radical scavenger/radical complex from being moved within and/or away from the electrochemical cell.

In another embodiment, the multifunctional compounds of the present disclosure (or polymers therefrom) can be used to improve the performance of a lithium ion battery. For example, fluoropolymers do not have good bonding to the Al charge collector (cathode) or Cu charge collector (anode) in lithium ion batteries. The multifunctional compounds of the present disclosure, which comprise a phosphorous group and a fluorinated moiety, can be used to improve the bonding of the cathode and the anode to the charge collector. This improved bonding can result in better cycle stability and capacity retention of the electrodes and lithium ion battery.

The ability of the compounds disclosed herein to chelate metal and bond to metals may engender these compounds (or polymers therefrom) to be used in other applications besides electrochemical cells. In one embodiment, the compounds disclosed herein may be used as a chelating agent for (rare) earth metal recovery. In one embodiment, the compounds disclosed herein can be adsorbed directly onto a metal surface enabling the fluorinated portion of the compound to face away from the surface, generating a surface layer sufficiently bonded to the metal surface, which is resistant to chemical attack.

### EXAMPLES

Advantages and embodiments of this disclosure are further illustrated by the following examples, but the particular materials and amounts thereof recited in these examples, as well as other conditions and details, should not be construed to unduly limit this invention which is defined by the claims. In these examples, all percentages, proportions and ratios are by weight unless otherwise indicated.

Unless otherwise noted or readily apparent from the context, all parts, percentages, ratios, etc. in the Examples and the rest of the specification are by weight. The following abbreviations are used in this section: eq=equivalents, min=minutes, h=hours, RT=room temperature, mol=moles, mmol=millimoles, mL=milliliters, L=liters, g=grams, M=molar, mbar=millibar, equiv=equivalents, NMR=nuclear magnetic resonance, b.p.=boiling point.

### Preparatory Examples

Preparatory Example 1 (PE-1): diethyl (hydroxymethyl)phosphonate ((CH₃CH₂O)₂P(=O)CH₂OH)

Paraformaldehyde (36.6 g, 1.2 mol), potassium carbonate (6.4 g, 46.6 mmol), and ethanol (700 mL) were added under inert atmosphere to a three-necked flask (1 L) equipped with a thermometer and reflux condenser. The suspension was stirred vigorously for 1.5 h at RT and diethyl phosphite (128.5 g, 0.9 mol, 120 mL) was quickly added. The reaction mixture was heated to 72 to 73 °C and stirred at this temperature over the course of 18 h. Then, the reaction mixture was cooled to room temperature, filtered and the solvent was evaporated in vacuo. The crude product was distilled *via* a Vigreux column in vacuo (7 mbar). The desired product was obtained as a clear colorless liquid with b.p. 105 to 109 °C at 7 mbar. The yield was 78% (113.6 g, 0.7 mol). The structure assigned was consistent with spectral analysis.

Preparatory Example 2 (PE-2):Perfluoro allyl fluorosulfate (CF₂=CFCF₂OSO₂F, PFAFS)

PFAFS was prepared following the procedure described in Molecules 2011, 16, 6512-6540.

Preparatory Example 3 (PE-3): 1,1,2,3,3-pentafluoro-3-iodoprop-1-ene (PFAI)

PFAI were prepared following the procedure described in Molecules 2011, 16, 6512-6540.

### Examples

### Example 1 (Ex-1): diethyl(1,1,2,3,3-pentafluoroprop-2-en-1-yl)phosphonate (PADP)

A suspension of NaH in mineral oil (6.1 g, 153.0 mmol, 1.06 equiv.; 60%) and dry CH₃CN (85 mL) were added to a 250 mL three-necked flask equipped with a thermometer and reflux condenser. The suspension was stirred for 20 min at room temperature, then cooled to 18 °C and diethyl phosphite (20.0 g, 145.0 mmol) was slowly added dropwise at this temperature so that the reaction temperature did not exceed 31 °C.

Then, the reaction mixture was stirred over 3.5 h until the reaction mixture got transparent. The reaction mixture was transferred into a 250 mL dropping funnel under inert gas atmosphere. The dropping funnel was connected to a 250 mL three-necked flask equipped with a thermometer and a reflux condenser. Perfluoro allyl fluorosulfate (PE-2; 36.7 g, 159.6 mmol, 1.1 equiv.) and dry CH₃CN (75 mL) were added to this flask and the reaction solution was cooled to - 30 °C.

At this temperature, the salt solution was added to the solution of PFAFS. During the addition, the reaction temperature rose to -20 °C. The reaction mixture was stirred at this temperature for 2.5 h, slowly warmed to room temperature and allowed to stir at this temperature over the course of 15 h. Afterwards, the reaction mixture was evaporated *in vacuo* and carefully poured into a solution of ice-cold hydrochloric acid (250 mL 3%). The water phase was extracted with diethyl ether (3 x 200 mL). The organic phases were combined, washed with a cold aqueous saturated sodium chloride solution (1 x 300 mL) and saturated NaHCO₃ (3 × 300 mL), and dried thoroughly with anhydrous magnesium sulfate. The solvent was evaporated *in vacuo.*

The crude product was distilled over a short Vigreux column *in vacuo* (0.7 mbar). PADP was isolated as clear yellowish liquid in 68% yield (26.3 g, 98 mmol, b.p. 49 to 51 °C at 0.7 mbar) and the spectral analysis was consistent with the PADP structure.

### Example 2 (EX-2): bis(trimethylsilyl) (1,1,2,3,3-pentafluoroprop-2-en-1-yl)phosphonate

Ex-1 (20.2 g, 75.4 mmol) was added under inert atmosphere to a 100 mL three-necked flask equipped with a thermometer and reflux condenser.

The starting compound was cooled to 10 °C and bromotrimethylsilane (30.0 g, 196.1 mmol, 2.6 equiv.) was quickly added. The reaction mixture was stirred intensively at 45 to 46 °C over the course of 1 h and at 65 °C for a further 18 h. After cooling to room temperature, the reaction mixture was evaporated *in vacuuo* (0.7 mbar) at 30 to 31 °C within 3 h.

Bis(trimethylsilyl) (1,1,2,3,3-pentafluoroprop-2-en-1-yl)phosphonate was isolated in 96% yield (25.8 g, 72.5 mmol) as an oily residue with traces of bis(trimethylsilyl) phosphorofluoridate. Spectral analysis was consistent with the bis(trimethylsilyl) (1,1,2,3,3-pentafluoroprop-2-en-1-yl)phosphonate structure.

### Example 3 (EX-3): (1,1,2,3,3-pentafluoroprop-2-en-1-yl)phosphonic acid

In a 500 mL three-necked flask, equipped with a thermometer and reflux condenser, Ex-2 (25.5 g, 71.6 mmol) was dissolved in methanol (200 mL) at room temperature under an argon atmosphere and water (40.0 g, 2.2 mol, 31.0 equiv.) was added dropwise so that the reaction temperature did not exceed 30 °C.

Then, the reaction mixture was stirred intensively at a temperature of 25 to 30 °C over 48 hours. At the end of the reaction, the reaction mixture was concentrated *in vacuo,* the residue was dissolved in water (150 mL) and extracted with diethyl ether (3 × 150 mL).

The water solution was concentrated by a water-jet pump at 40 °C and the liquid residue was dried thoroughly in *vacuo* (0.7 mbar) at 35 °C within 5 h. The yield of (1,1,2,3,3-pentafluoroprop-2-en-1-yl)phosphonic acid (PAPA) was 82% (12.6 g, 59 mmol). Spectral analysis was consistent with the PAPA structure.

### Example 4 (EX-4): diethyl ({[(1E & 1Z)-1,2,3,3,3-pentafluoroprop-1-en-1-yl]oxy}methyl)phosphonate

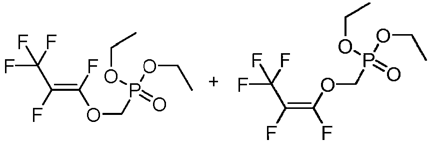

A suspension of sodium hydride in mineral oil (60%; 3.4 g, 85.0 mmol) and tetrahydrofuran (THF; 270 mL) were added to a three-necked flask (500 mL) equipped with a dropping funnel, thermometer, and reflux condenser. The suspension was stirred for 15 min at RT, then cooled to 5 °C and PE-1 (13.3 g, 79.1 mmol) was slowly added to the flask. Then, the reaction mixture was stirred for 2 h at this temperature and within 1.5 h warmed up to 18 °C until the reaction mixture was almost transparent. The reaction solution was cooled to -75 °C. The dropping funnel was replaced by a gas inlet tube and hexafluoropropene (HFP; 33.6 g, 224.0 mmol) was added at -75 to -65 °C so that the reaction temperature of -62 °C was not exceeded and HFP was completely liquefied. The reaction mixture was stirred at this temperature for 1 h and allowed to stir overnight while slowly warming up to room temperature. A saturated NH₄Cl solution (61 mL) was carefully added to the reaction mixture under vigorous stirring at RT. The lower layer was separated, and the water phase was extracted with diethyl ether (3 × 100 mL). The organic phases were combined, washed with an aqueous saturated sodium chloride solution and then thoroughly dried with anhydrous sodium sulfate. The solvent was evaporated in vacuo. The remaining residue was collected and distilled *via* a Vigreux column in vacuo (7 mbar). The desired olefin as a mixture of *cis* and *trans* isomers (22 mol% to 78 mol%) was a clear, colorless liquid with b.p. 71 to 75 °C at 7 mbar. The yield was 98% (23.4 g, 78 mmol). The trans and cis isomers mentioned above were consistent with the spectral analysis.

### Example 5 (EX-5): Bis(trimethylsilyl) ({[(1E& 1Z)-1,2,3,3,3-pentafluoroprop-1-en-1-yl]oxy }methyl)phosphonate

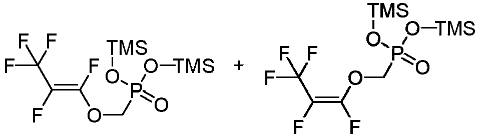

Diethyl ({[(1E & 1Z)-1,2,3,3,3-pentafluoroprop-1-en-1-yl]oxy}methyl)phosphonate (*cis* / *trans*-mixture) prepared as described for EX-4 (6.4 g, 21.5 mmol) was placed in a three-necked flask (50 mL) equipped with a thermometer and reflux condenser under inert atmosphere. The starting compound was cooled to 12 °C and bromo trimethylsilane (9.6 g, 62.7 mmol) was rapidly added. The reaction mixture was stirred vigorously at 40 °C over the course of 1 h and at 50 °C for further 18 h. After cooling to room temperature, the reaction mixture was concentrated in vacuo (21 mbar) at 35 to 45 °C for 1.5 h and at RT at 7 mbar for 3 h.

The product was isolated in 98% yield (8.1 g, 21.0 mmol) and characterized with ¹H NMR (401 MHz, CDCl₃), ¹³C NMR (101 MHz, CDCl₃), ¹⁹F NMR (376 MHz, CDCl₃), and ³¹P{¹H} NMR (161 MHz, CDCl₃) analysis.

### Example 6 (EX-6): {[(2,3,3,3-tetrafluoropropanoyl)oxy]methyl}phosphonic acid

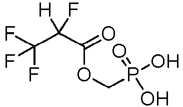

The product from EX-5 (8.1 g, 21.0 mmol) was poured into methanol (70 mL) in a three-necked flask (100 mL) equipped with a thermometer and reflux condenser under inert gas atmosphere at RT. Water (10 g) was carefully added under vigorous stirring so that the reaction temperature did not exceed 29 °C.

The reaction mixture was stirred intensively at RT for 48 h. At the end of the reaction, the reaction mixture was evaporated in vacuo at 40 °C. The residue was dissolved in acetone (100 mL) and then thoroughly dried with anhydrous MgSO₄. The acetone solution was filtered, evaporated and the liquid residue was dried thoroughly in vacuo (7 mbar) at 35 to 40 °C over the course of 3 h. The yield was 97% (4.9 g; 20.4 mmol). Spectral analysis was consistent with the above-listed structure.

### Example 7 (EX-7): ({[(1E & 1Z)-1,2,3,3,3-pentafluoroprop-1-en-1-yl]oxy}methyl)phosphonic acid

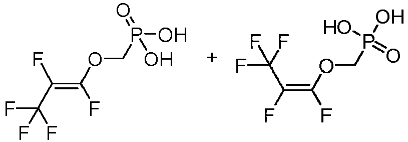

Bis(trimethylsilyl) ({[(1E& 1Z)-1,2,3,3,3-pentafluoroprop-1-en-1-yl]oxy}methyl)phosphonate (as made in EX-5 including both cis and trans forms, 44.2 g, 114.4 mmol) was added under inert atmosphere to a three-necked flask (1 L) equipped with a thermometer and reflux condenser. Under vigorous stirring, methanol (800 mL) was quickly added so that the reaction temperature did not exceed 25 °C. Afterwards, the reaction mixture was stirred for two days at RT. At the end of the reaction, the mixture was concentrated at 35 °C in vacuo and the liquid residue was thoroughly dried in vacuo (7 mbar) at room temperature over the course of 2.5 h. The yield was 97% (26.8 g, 110.7 mmol). Spectral analysis was consistent with the above-listed structures.

### Example 8A (EX-8A): Diethyl {[(1,1,2,3,3-pentafluoroprop-2-en-1-yl)oxy]methyl}phosphonate

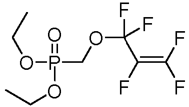

A suspension of sodium hydride in mineral oil (60%, 1.6 g, 40.0 mmol) and monoglyme (70 mL) were added to a three-necked flask (100 mL) equipped with a dropping funnel, thermometer and reflux condenser. The suspension was stirred 0.5 h at RT, then cooled to 5 °C and PE-1 (6.3 g, 37.5 mmol) was slowly added to the flask so that the reaction temperature did not exceed 8 °C. The reaction mixture was slowly warmed up to 15 °C and stirred at this temperature over the course of 2.5 h until it became almost transparent. Then, the reaction mixture was cooled to -60 °C and perfluoroallyl iodide (PFAI; 9.6 g, 37.2 mmol) was slowly added. The reaction mixture was slowly warmed up to RT, stirred for 48 h, was filtered, concentrated in vacuo and carefully poured into ice-cold water (150 mL) and extracted with chloroform (3 × 100 mL). The organic phases were combined, washed with cold water (3 × 150 mL) and a saturated NaHCO₃ solution (200 mL) and then dried thoroughly with anhydrous magnesium sulfate. The solvent was evaporated in vacuo. The remaining residue was distilled *via* a Vigreux column in vacuo (7 mbar). The desired olefin was obtained as a clear yellowish liquid with b.p. 64 to 68 °C at 7 mbar. The yield was 11% (1.2 g, 4.0 mmol). Spectral analysis was consistent with the Diethyl {[(1,1,2,3,3-pentafluoroprop-2-en-1-yl)oxy]methyl}phosphonate structure.

### Example 8B (Ex-8B): Diethyl {[(1,1,2,3,3-pentafluoroprop-2-en-1-yl)oxy]methyl}phosphonate

A three-necked flask (100 mL) equipped with a dropping funnel, thermometer and reflux condenser was charged with diethyl ether (65 mL) and cooled to -80 °C. Afterwards, a solution of butyllithium (*n*-BuLi) in *n*-hexane (2.5 M; 10.6 g, 38.1 mmol, 1 eq.) was added. The solution was cooled to -90 °C and diethylhydroxymethylphosphonate (6.4 g, 38.1 mmol) was slowly added to the flask so that the reaction temperature did not exceed -85 °C. After 1 h, the reaction mixture was warmed up to RT within 1.5 h. The obtained lithium salt solution was transferred to a dropping funnel (100 mL) under inert conditions. The dropping funnel was connected to a three-necked flask (250 mL) equipped with a dropping funnel, thermometer and reflux condenser. The flask was charged with a solution of PE-2 (13.1 g, 56.9 mmol, 1.5 eq.) in diethyl ether (120 mL) and cooled to -20 °C. Then, the prior obtained lithium salt solution was added and the reaction temperature increased to -10 °C. Afterwards, the reaction mixture was warmed up to RT and a saturated solution of NH₄Cl (45 mL) was added. The lower phase was separated, and the aqueous phase extracted with diethyl ether (2 x 50 mL). The organic phases were combined, washed with water (2 x 70 mL), aqueous saturated sodium chloride solution (70 mL), and dried with sodium sulfate. The solvent was evaporated in vacuo. The remaining residue was distilled *via* a Vigreux column in vacuo (7 mbar). The desired olefin was obtained as a clear yellowish liquid with b.p. 65 to 68 °C at 7 mbar. The yield was 47% (5.3 g, 18 mmol).

### Example 9 (EX-9): tetraethyl {[(1E & 1Z)-1,2,3,3-tetrafluoroprop-1-ene-1,3-diyl]bis(oxymethylene)} bis (phosphonate)

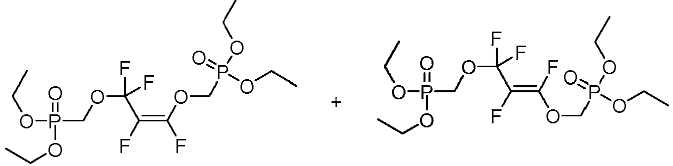

A suspension of sodium hydride in mineral oil (60%, 1.6 g, 40.0 mmol) and monogly (45 mL) were added to a three-necked flask (100 mL) equipped with a thermometer and reflux condenser. The suspension was stirred for 30 min at room temperature, then cooled to 10 to 12 °C and PE-1 (6.2 g, 36.9 mmol) was slowly added so that the reaction temperature did not exceed 15 °C. The reaction mixture was stirred over the course of 2 h until the reaction mixture got transparent and the reaction temperature rose to 20 °C. The sodium salt solution was carefully poured into a dropping funnel (100 mL) under inert gas atmosphere, which was connected to a three-necked flask (100 mL) equipped with a thermometer and reflux condenser. PE-2 (4.3 g,18.7 mmol) and MG (25 mL) were added to this flask and the reaction solution was cooled to -35 to -30 °C. The salt solution was slowly added at this temperature and the temperature rose to -20 °C. Afterwards, the reaction mixture was slowly warmed to RT and was stirred overnight. Then, the reaction mixture was filtered, concentrated in vacuo, and carefully poured into ice-cold water (200 mL) and extracted with chloroform (3 × 100 mL). The organic phases were combined, washed with cold water (2 × 200 mL) and a saturated NaHCO₃ solution (3 × 150 mL) and then thoroughly dried with anhydrous magnesium sulfate. The solvent was evaporated in vacuo. The crude product was distilled *via* a Vigreux column in vacuo (7 mbar). The desired olefin was obtained as a clear yellowish liquid and as a mixture of *cis* (63%) and *trans* (37%) isomers with b.p. 161 to 165 °C (7 mbar). Spectral analysis was consistent with the above-mentioned structures.

Foreseeable modifications and alterations of this invention will be apparent to those skilled in the art without departing from the scope of this invention which is defined by the claims. This invention which is defined by the claims should not be restricted to the embodiments that are set forth in this application for illustrative purposes.

## Claims

1. A method for making a multifunctional compound, the method comprising:
(a) obtaining a first compound represented by H-(OR)ₙ-P(=O)(ORₕ¹)₂ where R is selected from the group consisting of -CH₂-, -(CH₂)₂-, -(CH₂)₃-, -(CH₂)₄-, and -CH(CH₃)-;
(b) combining the first compound with a base to form an intermediate; and
(c) reacting the intermediate with a second compound to form a third compound, wherein the second compound is represented by the formulas CFY¹=CF-CF₂Y² (IIA) or CFY²=CF-CF₂Y¹ (IIB) and the third compound is represented by CF₂=CF-CFY²-(OR)ₙ-P(=O)(ORₕ¹)₂ (IIIA) or CF₂X¹CF=CF-(OR)ₙ-P(=O)(ORₕ¹)₂ (IIIB)
where:
R is selected from the group consisting of -CH₂-, -(CH₂)₂-, -(CH₂)₃-, -(CH₂)₄-, and -CH(CH₃)-;
X¹ is F or -(OR)ₙ-P(=O)(ORₕ¹)₂;
n is 0 or 1;
Rₕ¹ is an alkyl group having 1 to 6 carbon atoms and optionally comprising at least one catenated ether linkage;
Y¹ is -F, -I, -Cl, -Br, -OSO₂Cl, -OSO₂CH₃, -OSO₂F, or -OSO₂CF₃; and
Y² is -F, -Cl, -Br, -H, or a fluoroalkyl group comprising 1 to 3 carbon atoms, wherein the fluoroalkyl group optionally comprises at least one of an ether linkage, Cl, Br, or I.

2. The method of claim 1, wherein the base comprises at least one of metal hydride, metal bicarbonate, metal *tert*-butoxide, *n*-butyl lithium, or a strong non-nucleophilic base.

3. The method of any of the previous claims, wherein the second compound is at least one of hexafluoropropylene, 3-iodoperfluoropropene, 3-chloroperfluoropropene, 3-bromoperfluoropropene, CF₂=CFCF₂OSO₂CF₃, CF₂=CFCF₂OSO₂CH₃, CF₂=CFCF₂OSO₂Cl, or CF₂=CFCF₂OSO₂F.

4. The method of any of the previous claims, wherein the first compound is a dimethyl hydrogen phosphite, diethyl hydrogen phosphite, dimethyl (hydroxymethyl)phosphonate, or diethyl (hydroxymethyl)phosphonate.

5. The method of any of the previous claims, further comprising (d) silylating the third compound to form a fourth compound of the formula
CF₂=CF-CFY²-(OR)ₙ-P(=O)(OSiRₕ²₃)₂ (IVA)
or
CF₂X²CF=CF-(OR)ₙ-P(=O)(OSiRₕ²₃)₂ (IVB)
where
R is selected from the group consisting of -CH₂-, -(CH₂)₂-, -(CH₂)₃-, -(CH₂)₄-, and -CH(CH₃)-;
X² is F or -(OR)ₙ-P(=O)(OSiRₕ²₃)₂;
n is 0 or 1;
Rₕ² is an alkyl group comprising 1 to 2 carbons; and
Y² is -F, -Cl, -Br, -H, or a fluoroalkyl group comprising 1 to 3 carbon atoms, wherein the fluoroalkyl group optionally comprises at least one of an ether linkage, Cl, Br, or I.

6. The method of claim 5, further comprising transesterifying the fourth compound into the phosphonic acid form according to the formula
CF₂=CF-CFY²-(OR)ₙ-P(=O)(OH)₂ (VA)
or
CF₂X³CF=CF-(OR)ₙ-P(=O)(OH)₂ (VB),
where
R is selected from the group consisting of -CH₂-, -(CH₂)₂-, -(CH₂)₃-, -(CH₂)₄-, and -CH(CH₃)-;
X³ is F or -(OR)ₙ-P(=O)(OH)₂;
n is 0 or 1; and
Y² is -F, -Cl, -Br, -H, or a fluoroalkyl group comprising 1 to 3 carbon atoms, wherein the fluoroalkyl group optionally comprises at least one of an ether linkage, Cl, Br, or I.

7. A compound of the following formulas:
CF₂=CF-CFY²-OR-P(=O)(OQ)₂ (VIIA)
CF₂X³CF=CF-OR-P(=O)(OQ)₂ (VIIB),
or
CF₂X³CHFC(=O)-OR-P(=O)(OH)₂ (VIB)
where:
R is selected from the group consisting of -CH₂-, -(CH₂)₂-, -(CH₂)₃-, -(CH₂)₄-, and -CH(CH₃)-;
X³ is F or -OR-P(=O)(OQ)₂;
Y² is -F, -Cl, -Br, -H, or a fluoroalkyl group comprising 1 to 3 carbon atoms, wherein
the fluoroalkyl group optionally comprises at least one of an ether linkage, Cl, Br, or I; and
Q is an alkyl group having 1 to 6 carbon atoms and optionally comprising at least one catenated ether linkage, -Si(CH₃)₃, -Si(CH₂CH₃)₃, -H, a metallic cation, or a quaternary ammonium cation.

8. The compound according to claim 7, wherein the compound is
(i) (QO)₂P(=O)-RO-CF₂CF=CF₂ wherein R is selected from the group consisting of -CH₂-, -(CH₂)₂-, -(CH₂)₃-, -(CH₂)₄-, and -CH(CH₃)-, Q is an alkyl group having 1 to 6 carbon atoms, and optionally comprising at least one catenated ether linkage, -Si(CH₃)₃, -Si(CH₂CH₃)₃, -H, a metallic cation, or a quaternary ammonium cation;
or
(ii) (QO)₂P(=O)-RO-CF=CFCF₃ wherein R is selected from the group consisting of -CH₂-, -(CH₂)₂-, -(CH₂)₃-, -(CH₂)₄-, and -CH(CH₃)-, Q is an alkyl group having 1 to 6 carbon atoms and optionally comprising at least one catenated ether linkage, -Si(CH₃)₃, -Si(CH₂CH₃)₃, -H, a metallic cation, or a quaternary ammonium cation.

9. A composition comprising a purified form of the compound according to any one of claims 7-8.

10. An electrochemical article comprising the compound according to any one of claims 7-8.

11. A polymer derived from the compound according to any one of claims 7-8.

12. The polymer according to claim 11, wherein the polymer is further derived from a fluorinated monomer.

13. An electrochemical article comprising the polymer according to any one of claims 11-12.

14. The electrochemical article of claim 13 comprising a proton exchange membrane prepared from the polymer of any one of claims 11-12.

15. A chelating and adhesion agent according to the formula
CF₂X³CHFC(=O)-(OR)ₙ-P(=O)(OH)₂ (VIB')
where:
R is selected from the group consisting of -CH₂-, -(CH₂)₂-, -(CH₂)₃-, -(CH₂)₄-, and -CH(CH₃)-;
X³ is F or -(OR)ₙ-P(=O)(OQ)₂;
n is 0 or 1; and
Q is an alkyl group having 1 to 6 carbon atoms and optionally comprising at least one catenated ether linkage, -Si(CH₃)₃, -Si(CH₂CH₃)₃, -H, a metallic cation, or a quaternary ammonium cation.

## Patentansprüche

1. Ein Verfahren zum Herstellen einer multifunktionellen Verbindung, das Verfahren umfassend:
(a) Erhalten einer ersten Verbindung dargestellt durch H-(OR)ₙ-P(=O)(ORₕ¹)₂, wobei R ausgewählt ist aus der Gruppe bestehend aus -CH₂-, - (CH₂)₂-, -(CH₂)₃-, -(CH₂)₄- und -CH(CH₃)-;
(b) Kombinieren der ersten Verbindung mit einer Basis, um ein Intermediat zu bilden; und
(c) Umsetzen des Intermediats mit einer zweiten Verbindung, um eine dritte Verbindung zu bilden,
wobei die zweite Verbindung durch die Formeln CFY¹=CF-CF₂Y² (IIA) oder CFY²=CF-CF₂Y¹ (IIB) dargestellt wird und die dritte Verbindung durch
CF₂=CF-CFY²-(OR)ₙ-P(=O)(ORₕ¹)₂ (IIIA)
oder
CF₂X¹CF=CF-(OR)ₙ-P(=O)(ORₕ¹)₂ (IIIB)
dargestellt wird,
wobei:
R ausgewählt ist aus der Gruppe bestehend aus -CH₂-, -(CH₂)₂-, - (CH₂)₃-, -(CH₂)₄- und -CH(CH₃)-;
X¹ F oder -(OR)ₙ-P(=O)(ORₕ¹)₂ ist;
n 0 oder 1 ist;
Rh¹ eine Alkylgruppe ist, die 1 bis 6 Kohlenstoffatome aufweist, und gegebenenfalls umfassend mindestens eine verknüpfte Etherverkettung;
Y¹ -F, -I, -Cl, -Br, -OSO₂Cl, -OSO₂CH₃, -OSO₂F oder -OSO₂CF₃ ist; und
Y² -F, -Cl, -Br, -H oder eine Fluoralkylgruppe ist, umfassend 1 bis 3 Kohlenstoffatome, wobei die Fluoralkylgruppe gegebenenfalls mindestens eines von einer Etherverkettung, Cl, Br oder I umfasst.

2. Das Verfahren nach Anspruch 1, wobei die Basis mindestens eines von Metallhydrid, Metallbicarbonat, Metall-*tert*-butoxid, *n*-Butyllithium oder einer starken nicht-nucleophilen Basis umfasst.

3. Das Verfahren nach einem der vorstehenden Ansprüche, wobei die zweite Verbindung mindestens eines von Hexafluorpropylen, 3-lodperfluorpropen, 3-Chlorperfluorpropen, 3-Bromperfluorpropen, CF₂=CFCF₂OSO₂CF₃, CF₂=CFCF₂OSO₂CH₃, CF₂=CFCF₂OSO₂C1 oder CF₂=CFCF₂OSO₂F ist.

4. Das Verfahren nach einem der vorstehenden Ansprüche, wobei die erste Verbindung ein Dimethylwasserstoffphosphit, Diethylwasserstoffphosphit, Dimethyl(hydroxymethyl)phosphonat oder Diethyl(hydroxymethyl)phosphonat ist.

5. Das Verfahren nach einem der vorstehenden Ansprüche, ferner umfassend (d) ein Silylieren der dritten Verbindung, um eine vierte Verbindung der Formel CF₂=CF-CFY²-(OR)ₙ-P(=O)(OSiRₕ²₃)₂ (IVA) oder CF₂X²CF=CF-(OR)ₙ-P(=O)(OSiRₕ²₃)₂ (IVB) zu bilden, wobei
R ausgewählt ist aus der Gruppe bestehend aus -CH₂-, -(CH₂)₂-, -(CH₂)₃-, -(CH₂)₄- und -CH(CH₃)-;
X² F oder -(OR)ₙ-P(=O)(OSiRₕ²₃)₂ ist;
n 0 oder 1 ist;
Rₕ² eine Alkylgruppe ist, umfassend 1 bis 2 Kohlenstoffatome; und
Y² -F, -Cl, -Br, -H oder eine Fluoralkylgruppe ist, umfassend 1 bis 3 Kohlenstoffatome, wobei die Fluoralkylgruppe gegebenenfalls mindestens eines von einer Etherverkettung, Cl, Br oder I umfasst.

6. Das Verfahren nach Anspruch 5, ferner umfassend ein Umestern der vierten Verbindung in die Phosphonsäureform gemäß der Formel
CF₂=CF-CFY²-(OR)ₙ-P(=O)(OH)₂ (VA)
oder
CF₂X³CF=CF-(OR)ₙ-P(=O)(OH)₂ (VB),
wobei
R ausgewählt ist aus der Gruppe bestehend aus -CH₂-, -(CH₂)₂-, - (CH₂)₃-, -(CH₂)₄- und -CH(CH₃)-;
X³ F oder -(OR)ₙ-P(=O)(OH)₂ ist;
n 0 oder 1 ist; und
Y² -F, -Cl, -Br, -H oder eine Fluoralkylgruppe ist, umfassend 1 bis 3 Kohlenstoffatome, wobei die Fluoralkylgruppe gegebenenfalls mindestens eines von einer Etherverkettung, Cl, Br oder I umfasst.

7. Eine Verbindung der folgenden Formeln:
CF₂=CF-CFY²-OR-P(=O)(OQ)₂ (VIIA)
CF₂X³CF=CF-OR-P(=O)(OQ)₂ (VIIB)
oder
CF₂X³CHFC(=O)-OR-P(=O)(OH)₂ (VIB),
wobei:
R ausgewählt ist aus der Gruppe bestehend aus -CH₂-, -(CH₂)₂-, - (CH₂)₃-, -(CH₂)₄- und -CH(CH₃)-;
X³ F oder -OR-P(=O)(OQ)₂ ist;
Y² -F, -Cl, -Br, -H oder eine Fluoralkylgruppe ist, umfassend 1 bis 3 Kohlenstoffatome, wobei die Fluoralkylgruppe gegebenenfalls mindestens eines von einer Etherverkettung, Cl, Br oder I umfasst; und
Q eine Alkylgruppe ist, die 1 bis 6 Kohlenstoffatome aufweist, und gegebenenfalls umfassend mindestens eine verknüpfte Etherverkettung, -Si(CH₃)₃, -Si(CH₂CH₃)₃, -H, ein metallisches Kation oder ein quartäres Ammoniumkation.

8. Die Verbindung nach Anspruch 7, wobei die Verbindung ist:
(i) (QO)₂P(=O)-RO-CF₂CF=CF₂, wobei R ausgewählt ist aus der Gruppe bestehend aus -CH₂-, -(CH₂)₂-, -(CH₂)₃-, -(CH₂)₄- und -CH(CH₃)-, Q eine Alkylgruppe ist, die 1 bis 6 Kohlenstoffatome aufweist, und gegebenenfalls umfassend mindestens eine verknüpfte Etherverkettung, -Si(CH₃)₃, -Si(CH₂CH₃)₃, -H, ein metallisches Kation oder ein quartäres Ammoniumkation;
oder
(ii) (QO)₂P(=O)-RO-CF=CFCF₃ wobei R ausgewählt ist aus der Gruppe bestehend aus -CH₂-, -(CH₂)₂-, -(CH₂)₃-, -(CH₂)₄- und -CH(CH₃)-, Q eine Alkylgruppe ist, die 1 bis 6 Kohlenstoffatome aufweist, und gegebenenfalls mindestens umfassend eine verknüpfte Etherverkettung, -Si(CH₃)₃, -Si(CH₂CH₃)₃, -H, ein metallisches Kation oder ein quartäres Ammoniumkation.

9. Eine Zusammensetzung, umfassend eine gereinigte Form der Verbindung nach einem der Ansprüche 7 bis 8.

10. Ein elektrochemischer Gegenstand, umfassend die Verbindung nach einem der Ansprüche 7 bis 8.

11. Ein Polymer, das aus der Verbindung nach einem der Ansprüche 7 bis 8 stammt.

12. Das Polymer nach Anspruch 11, wobei das Polymer ferner aus einem fluorierten Monomer stammt.

13. Ein elektrochemischer Gegenstand, umfassend das Polymer nach einem der Ansprüche 11 bis 12.

14. Der elektrochemische Gegenstand nach Anspruch 13, umfassend eine Protonenaustauschmembran, die aus dem Polymer nach einem der Ansprüche 11 bis 12 erstellt ist.

15. Ein Chelatbildner und Klebstoff gemäß der Formel
CF₂X³CHFC(=O)-(OR)ₙ-P(=O)(OH)₂ (VIB'),
wobei:
R ausgewählt ist aus der Gruppe bestehend aus -CH₂-, -(CH₂)₂-, - (CH₂)₃-, -(CH₂)₄- und -CH(CH₃)-;
X³ F oder -(OR)ₙ-P(=O)(OQ)₂ ist;
n 0 oder 1 ist; und
Q eine Alkylgruppe ist, die 1 bis 6 Kohlenstoffatome aufweist, und gegebenenfalls umfassend mindestens eine verknüpfte Etherverkettung, -Si(CH₃)₃, -Si(CH₂CH₃)₃, -H, ein metallisches Kation oder ein quartäres Ammoniumkation.

## Revendications

1. Procédé de fabrication d'un composé multifonctionnel, le procédé comprenant :
a) l'obtention d'un premier composé représenté par H-(OR)ₙ-P(=O)(ORₕ¹)₂, où R est choisi dans le groupe constitué par -CH₂-, -(CH₂)₂-, -(CH₂)₃-, -(CH₂)₄-, et - CH(CH₃)- ;
b) la combinaison du premier composé avec une base pour former un intermédiaire ; et
(c) la réaction de l'intermédiaire avec un deuxième composé pour former un troisième composé ;
dans lequel le deuxième composé est représenté par les formules CFY¹⁼CF-CF₂Y² (IIA) ou CFY²=CF-CF₂Y¹ (IIB) et le troisième composé est représenté par CF₂=CF-CFY²-(OR)ₙ-P(=O)(ORₕ¹)₂ (IIIA) ou
CF₂X¹CF=CF-(OR)ₙ-P(=O)(ORₕ¹)₂ (IIIB)
où :
R est choisi dans le groupe constitué par -CH₂-, -(CH₂)₂-, -(CH₂)₃-, - (CH₂)₄-, et -CH(CH₃)- ;
X¹ est F ou -(OR)ₙ-P(=O)(ORₕ¹)₂ ;
n vaut 0 ou 1 ;
Rh¹ est un groupe alkyle ayant 1 à 6 atomes de carbone et comprenant facultativement au moins une liaison éther caténaire ;
Y¹ est -F, -I, -Cl, -Br, -OSO₂Cl, -OSO₂CH₃, -OSO₂F, ou -OSO₂CF₃ ; et
Y² est -F, -Cl, -Br, -H, ou un groupe fluoroalkyle comprenant 1 à 3 atomes de carbone, dans lequel le groupe fluoroalkyle comprend éventuellement au moins l'un parmi une liaison éther, Cl, Br ou I.

2. Procédé selon la revendication 1, dans lequel la base comprend au moins l'un parmi hydrure métallique, bicarbonate métallique, *tert*-butylate métallique, un *n*-butyle lithium ou une base non nucléophile forte.

3. Procédé selon l'une quelconque des revendications précédentes, dans lequel le deuxième composé est au moins l'un parmi hexafluoropropylène, 3-iodoperfluoropropène, 3-chloroperfluoropropène, 3-bromoperfluoropropène, CF₂=CFCF₂OSO₂CF₃, CF₂=CFCF₂OSO₂CH₃, CF₂=CFCF₂OSO₂Cl, ou CF₂=CFCF₂OSO₂F.

4. Procédé selon l'une quelconque des revendications précédentes, dans lequel le premier composé est un hydrogénophosphite de diméthyle, un hydrogénophosphite de diéthyle, un (hydroxyméthyl)phosphonate de diméthyle ou un (hydroxyméthyl)phosphonate de diéthyle.

5. Procédé selon l'une quelconque des revendications précédentes, comprenant en outre (d) le silylage du troisième composé pour former un quatrième composé de formule
CF₂=CF-CFY²-(OR)ₙ-P(=O)(OSiRₕ²₃)₂ (IVA)
ou
CF₂X²CF=CF-(OR)ₙ-P(=O)(OSiRₕ²₃)₂ (IVB)
où
R est choisi dans le groupe constitué par -CH₂-, -(CH₂)₂-, -(CH₂)₃-, - (CH₂)₄-, et -CH(CH₃)- ;
X² est F ou -(OR)ₙ-P(=O)(OSiRₕ²₃)₂ ;
n vaut 0 ou 1 ;
Rₕ² est un groupe alkyle comprenant 1 à 2 carbones ; et
Y² est -F, -Cl, -Br, -H, ou un groupe fluoroalkyle comprenant 1 à 3 atomes de carbone, dans lequel le groupe fluoroalkyle comprend éventuellement au moins l'un parmi une liaison éther, Cl, Br ou I.

6. Procédé selon la revendication 5, comprenant en outre la transestérification du quatrième composé sous la forme d'acide phosphonique selon la formule
CF₂=CF-CFY²-(OR)ₙ-P(=O)(OH)₂ (VA)
ou
CF₂X³CF=CF-(OR)ₙ-P(=O)(OH)₂ (VB),
où
R est choisi dans le groupe constitué par -CH₂-, -(CH₂)₂-, -(CH₂)₃-, - (CH₂)₄-, et -CH(CH₃)- ;
X³ est F ou -(OR)ₙ-P(=O)(OH)₂ ;
n vaut 0 ou 1 ; et
Y² est -F, -Cl, -Br, -H, ou un groupe fluoroalkyle comprenant 1 à 3 atomes de carbone, dans lequel le groupe fluoroalkyle comprend éventuellement au moins l'un parmi une liaison éther, Cl, Br ou I.

7. Composé des formules suivantes :
CF₂=CF-CFY²-OR-P(=O)(OQ)₂ (VIIA)
CF₂X³CF=CF-OR-P(=O)(OQ)₂ (VIIB),
ou
CF₂X³CHFC(=O)-OR-P(=O)(OH)₂ (VIB)
où :
R est choisi dans le groupe constitué par -CH₂-, -(CH₂)₂-, -(CH₂)₃-, - (CH₂)₄-, et -CH(CH₃)- ;
X³ est F ou -OR-P(=O)(OQ)₂ ;
Y² est -F, -Cl, -Br, -H, ou un groupe fluoroalkyle comprenant 1 à 3 atomes de carbone, dans lequel le groupe fluoroalkyle comprend éventuellement au moins l'un parmi une liaison éther, Cl, Br ou I ; et
Q est un groupe alkyle ayant 1 à 6 atomes de carbone et comprenant facultativement au moins une liaison éther caténaire, -Si(CH₃)₃, -Si(CH₂CH₃)₃, -H, un cation métallique, ou un cation ammonium quaternaire.

8. Composé selon la revendication 7, dans lequel le composé est
(i) (QO)₂P(=O)-RO-CF₂CF=CF₂, où R est choisi dans le groupe constitué par -CH₂-, -(CH₂)₂-, -(CH₂)₃-, -(CH₂)₄-, et -CH(CH₃)-, Q est un groupe alkyle ayant 1 à 6 atomes de carbone, et comprenant facultativement au moins une liaison éther caténaire, -Si(CH₃)₃, -Si(CH₂CH₃)₃, -H, un cation métallique, ou un cation ammonium quaternaire ;
soit
(ii) (QO)₂P(=O)-RO-CF=CFCF₃ où R est choisi dans le groupe constitué par - CH₂-, -(CH₂)₂-, -(CH₂)₃-, -(CH₂)₄-, et -CH(CH₃)-, Q est un groupe alkyle ayant 1 à 6 atomes de carbone et comprenant facultativement au moins une liaison éther caténaire, -Si(CH₃)₃, -Si(CH₂CH₃)₃, -H, un cation métallique, ou un cation ammonium quaternaire.

9. Composition comprenant une forme purifiée du composé selon l'une quelconque des revendications 7 à 8.

10. Article électrochimique comprenant la composition selon l'une quelconque des revendications 7 à 8.

11. Polymère dérivé du composé selon l'une quelconque des revendications 7 à 8.

12. Polymère selon la revendication 11, dans lequel le polymère est en outre dérivé d'un monomère fluoré.

13. Article électrochimique comprenant le polymère selon l'une quelconque des revendications 11 à 12.

14. Article électrochimique selon la revendication 13, comprenant une membrane échangeuse de protons préparée à partir du polymère selon l'une quelconque des revendications 11 à 12.

15. Agent chélateur et d'adhérence selon la formule
CF₂X³CHFC(=O)-(OR)ₙ-P(=O)(OH)₂ (VIB')
où :
R est choisi dans le groupe constitué par -CH₂-, -(CH₂)₂-, -(CH₂)₃-, - (CH₂)₄-, et -CH(CH₃)- ;
X³ est F ou -(OR)ₙ-P(=O)(OQ)₂ ;
n vaut 0 ou 1 ; et
Q est un groupe alkyle ayant 1 à 6 atomes de carbone et comprenant facultativement au moins une liaison éther caténaire, -Si(CH₃)₃, -Si(CH₂CH₃)₃, -H, un cation métallique, ou un cation ammonium quaternaire.
